# EUROPÄISCHE PATENTSCHRIFT

(11) **EP 0 483 409 B1**
(45) Veröffentlichungstag und Bekanntmachung des Hinweises auf die Patenterteilung: **26.07.1995**
(21) Anmeldenummer: 90121066.6
(22) Anmeldetag: 02.11.1990
(51) Int. Cl.: B65G 69/28

(54) **Überfahrbrücke für Rampen mit um eine rampenseitige Achse verschwenkbarer Brückenplatte und seitlichen Fussschutzblechen**
Dockboard with a hinged platform and lateral toe guards
Passerelle de dock avec plateforme pivotante et tôles latérales de protection des pieds

(43) Veröffentlichungstag der Anmeldung: 06.05.1992
(73) Patentinhaber: VAN WIJK NEDERLAND B.V., NL-8243 PH Lelystad (NL)
(72) Erfinder: Pereira das Dores, Antonio, NL-8224 HL Lelystad (NL)
(74) Vertreter: Beil, Hans Chr., Dr.

(56) Entgegenhaltungen:
- EP-A- 0 386 850
- DE-A- 2 736 130
- US-A- 3 886 615
- US-A- 4 110 860

## Beschreibung

Die Erfindung betrifft eine Überfahrbrücke für Rampen mit einer an ihrem rampenseitigen Ende um eine waagrechte Achse verschwenkbaren Brückenplatte, die eine ein- und ausschwenkbare bzw. ein- und ausfahrbare Verlängerung zum Auflegen auf die zu be- bzw. entladende Plattform und seitliche Fußschutzbleche aufweist.

Derartige Überfahrbrücken sind beispielsweise aus US-A-4 110 860 bekannt. Dort sind Überfahrbrücken beschrieben, bei denen an der Brückenplattform um eine waagrechte Achse am rampenseitigen Ende verschwenkbare dreiecksförmige Fußschutzbleche angebracht sind. Diese können sich beim Heben der Brücke heraus- und beim Absenken hineindrehen. Wegen der dort beschriebenen Art der Anbringung können diese Fußschutzbleche aber keinen größeren seitlichen Kräften widerstehen.

Ziel der Erfindung ist es, Überfahrbrücken mit über die gesamte Länge wirkenden und auf einfache Weise aussteifbaren Fußschutzblechen zu versehen, die den oberen Arbeitsbereich der Überfahrbrücke sichern und auch größere seitliche Kräfte ohne Probleme auffangen, wobei deren Herstellungskosten niedrig sind.

Dieses Ziel wird dadurch erreicht, daß L-förmige Profile (6), deren längerer Schenkel in Verlängerung der seitlichen Brückenfläche vertikal nach unten angeordnet ist und deren kürzerer Schenkel zum Brückeninneren hin zeigt, mit vorzugsweise lösbaren Mitteln (13) mit den seitlichen L-förmigen Außenprofilen (14) der Plattform (1) steif verbunden sind und diese Profile (6) an ihrer Innenseite am vorderen oberen Ende eine zwischen dem inneren Ende des kurzen Schenkels und dem längeren Schenkel angebrachtes, eine schräg nach unten und außen verlaufende schiefe Ebene bildendes Profil (7) und am unteren vorderen Ende eine L-förmige, horizontal angeordnete und mit ihrem freien Ende zum rampenseitigen Ende der Brücke weisende Halterung (8) aufweisen und
daß an dem um die zweite waagrechte Achse am rampen seitigen Ende des Profils (6) verschwenkbaren Fußschutzprofil (10) am vorderen Ende vertikal angeordneter, mit seinem längeren Schenkel rechtwinklig zum Fußschutzprofil (10) verlaufender und mit seinem kürzeren Schenkel vom rampenseitigen Ende der Brücke wegweisender L-förmiger Bügel (11) angebracht ist, dessen längerer Schenkel eine am unteren Ende zum Fußschutzprofil (10) hin verlaufende Abschrägung (12) aufweist.

Ein Ausführungsbeispiel der Erfindung wird anhand der Abbildungen 1-4 näher erläutert.

Dabei zeigt:
Fig. 1 einen Längsschnitt durch eine Überfahrbrücke im obersten Stand;
Fig. 2 einen Längsschnitt durch eine Überfahrbrücke im untersten Stand;
Fig. 3 einen Schrägriß der Vorderseite der Fußschutzkonstruktion mit Plattform im untersten Stand;
Fig. 4 einen Schrägriß der Vorderseite der Fußschutzkonstruktion mit Plattform im obersten Stand.

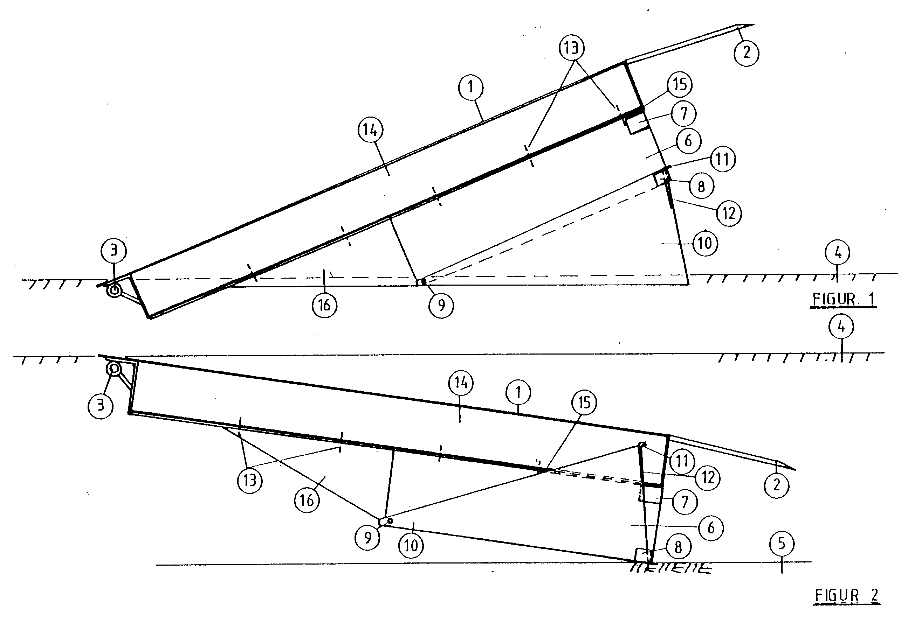

Fig. 1 zeigt die um die Achse (3) an der Rampe (4) schwenkbare Plattform (1) mit einer ein- und ausschwenkbaren bzw. ein- und ausfahrbaren Verlängerung (2). Gemäß dieser Ausführung ist an beiden äußersten Profilen (14) der Plattform (1) je eine Fußschutzvorrichtung vorzugsweise mit lösbaren Befestigungsmitteln (13) angebracht. Zwischen Profil (14) und festem Fußschutzteil (6) bzw. (16) können Dichtungen ("Airseals") (15) in Form von Bürsten bzw. Gummilippen o.ä. festgeklemmt sein, die den Restspalt zwischen Plattform (1) und Grube abdichten. Derart befestigte "Airseals" sind leicht austauschbar.

Die genannte Fußschutzvorrichtung besteht aus einem mit Profil (14) der Plattform (1) vorzugsweise mit lösbaren Mitteln (13) steif verbundenen Profil (6), das rechteckig oder vorzugsweise trapezförmig (dann ist die Vorderkante des Profils (6) gegenüber der Hinterkante verkürzt) sein kann und das, wenn erforderlich, ein etwa dreieckförmiges Verlängerungsteil (16) aufweisen kann. Anstelle der Dreiecksform kann das Verlängerungsteil (16) auch die Form eines am hinteren Ende "abgeschnittenen" Dreiecks aufweisen, also trapezförmig sein. Dieses Verlängerungsteil (16) kann vor allem bei Serien von Plattformen mit verschiedenen Längen vorteilhaft sein, weil dann dabei immer mit demselben Teil (6) gearbeitet werden kann und nur das Teil (16) der Plattformlänge angepaßt wird.

Die Höhe des Teils (6) hängt davon ab, wie weit die Plattform (1) in die Rampe (4) eintaucht, ehe sie auf dem hier nicht dargestellten Widerlager für den untersten Stand aufliegt, und ergibt sich aus dem Abstand zwischen der Plattformunterkante und dem Widerlager (5) für das bewegliche Teil (10) des Fußschutzes.

Teil (6) weist an seinem hinteren unteren Ende eine Achse (9) und an der Innenseite seines vorderen Endes oben eine schiefe Ebene (7) und unten eine L-förmige Halterung (8) auf.

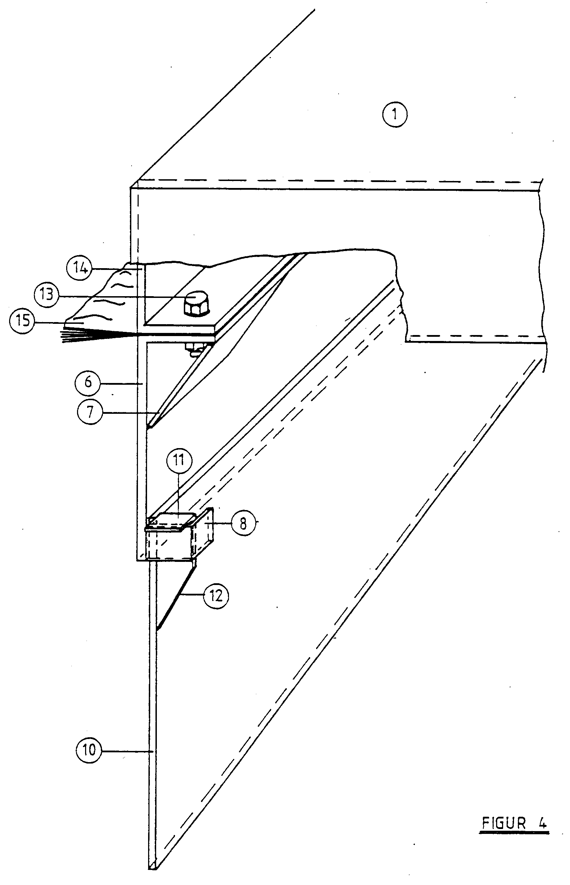

In Achse (9) ist ein Profil (10), dessen Oberkante zum Zwecke der Steifheit auch gekantet sein kann, wodurch ein L-Profil entsteht, drehbar gelagert. Das Profil (10) weist an seinem vorderen oberen Ende einen Bügel (11) mit einer Abschrägung (12) auf, mit dem es, wie in Figur 4 dargestellt, in der oberen Stellung der Plattform in der Halterung (8) von Teil (6) hängt und zwar derart, daß die Halterung (8) des Teils (6) nur minimal breiter als der Bügel (11) des Profils (10) ist, was für größere Steifheit des Profils (10) gegen seitliches Eindrücken sorgt.

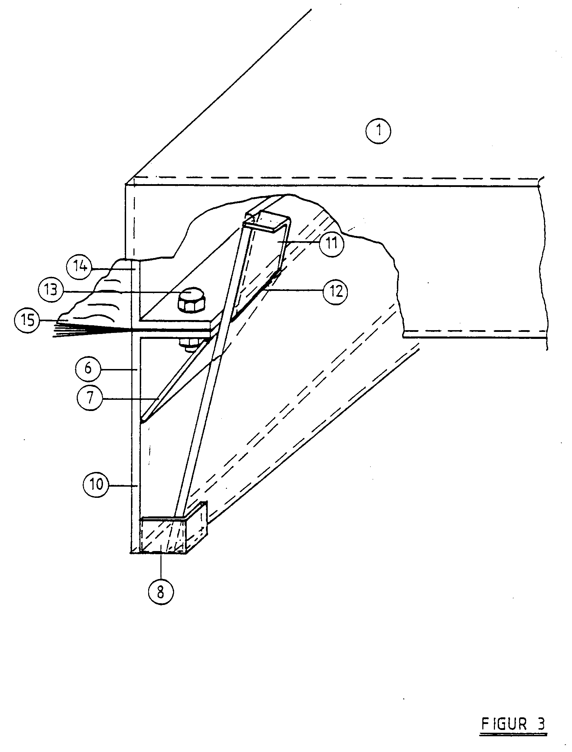

Senkt sich Plattform (1) in die Rampenausnehmung, stößt das Profil (10) auf das - nicht näher dargestellte - Widerlager (5), welches der Grubenboden oder ein am Brückenrahmen befestigtes Widerlager sein kann, senkt sich Plattform (1) jetzt weiter, dreht das Profil (10) um Achse (9) gegen die Drehrichtung der Plattform (1). Der Bügel (11) hebt sich aus der Halterung (8) des Teils (6) und das Profil (10) gleitet wegen der in der Längsachse gegebenen Flexibilität über die schiefe Ebene (7) des Teils (6) in Richtung Plattformmitte und zwar neben die Schenkel von Teil (6) und Profil (14). Die Senkbewegung der Plattform (1) endet, wenn diese auf die hier nicht dargestellten Widerlager für den untersten Plattformstand stößt. Es entsteht die in Figur 3 dargestellte Situation.

Wird die Plattform jetzt wieder angehoben, nähert die Halterung (8) sich wieder dem Bügel (11) des Profils (10). Die Abschrägung (12) des Bügels (11) sorgt dafür, daß der Bügel (11) wieder sanft in Halterung (8) gleitet und so wieder für eine steife Verbindung zwischen Profil (10) und festem Teil (6) des Fußschutzes gesorgt ist.

Der Vorteil der erfindungsgemäßen Überladebrücke liegt darin, daß die Fußschutzbleche im oberen Stand auch größere seitliche Kräfte aufnehmen können, daß "Airseals" auf einfache Weise angebracht und gegebenenfalls ausgewechselt werden können, daß verschiedene Plattformlängen mit denselben Teilen (6) und (10) ausgeführt werden können und nur verschiedene Verlängerungsteile (16) erforderlich sind, was die Produktion sehr vereinfacht und sich günstig auf die Kosten auswirkt.

## Patentansprüche

1. Überfahrbrücke für Rampen mit einer an ihrem rampenseitigen Ende um eine erste waagrechte Achse (3) verschwenkbare Brückenplattform (1), die eine ein- und ausklappbare bzw. ein- und ausfahrbare Verlängerung (2) zum Auflegen auf die zu be- bzw. entladende Ladefläche aufweist und mit seitlich angebrachten, um eine zweite waagrechte Achse (9) an ihrem rampenseitigen Ende verschwenkbaren dreiecksförmigen Fußschutzprofilen (10) ausgestattet ist, **dadurch gekennzeichnet, daß**
L-förmige Profile (6), deren längerer Schenkel in Verlängerung der seitlichen Brückenfläche vertikal nach unten angeordnet ist und deren kürzerer Schenkel zum Brückeninneren hin zeigt, mit vorzugsweise lösbaren Mitteln (13) mit den seitlichen L-förmigen Außenprofilen (14) der Plattform (1) steif verbunden sind und diese Profile (6) an ihrer Innenseite am vorderen oberen Ende eine zwischen dem inneren Ende des kurzen Schenkels und dem längeren Schenkel angebrachtes, eine schräg nach unten und außen verlaufende schiefe Ebene bildendes Profil (7) und am unteren vorderen Ende eine L-förmige, horizontal angeordnete und mit ihrem freien Ende zum rampenseitigen Ende der Brücke weisende Halterung (8) aufweisen und
daß an dem um die zweite waagrechte Achse am rampenseitigen Ende des Profils (6) verschwenkbaren Fußschutzprofil (10) am vorderen Ende ein vertikal angeordneter, mit seinem längeren Schenkel rechtwinklig zum Fußschutzprofil (10) verlaufender und mit seinem kürzeren Schenkel vom rampenseitigen Ende der Brücke wegweisender L-förmiger Bügel (11) angebracht ist, dessen längerer Schenkel eine am unteren Ende zum Fußschutzprofil (10) hin verlaufende Abschrägung (12) aufweist.

2. Überfahrbrücke nach Anspruch 1, dadurch gekennzeichnet, daß dreieckförmige Verlängerungsteile (16) die Profile (6) zum rampenseitigen Ende der Brücke hin verlängern.

3. Überfahrbrücke nach Anspruch 1 oder 2, dadurch gekennzeichnet, daß die Profile (6), die Fußschutzprofile (10) und die Verlängerungsteile (16) Stahlbleche sind.

4. Überfahrbrücke nach einem der Ansprüche 1 bis 3, dadurch gekennzeichnet, daß zwischen Plattformprofil (14) und Fußschutzprofil (6) Dichtungselemente (15) in Form von Bürsten oder Gummilippen angebracht sind.

5. Überfahrbrücke nach einem der Ansprüche 1 bis 4,dadurch gekennzeichnet, daß die lösbaren Mittel (13) Schraubverbindungen sind.

6. Überfahrbrücke nach einem der Ansprüche 1 bis 5, dadurch gekennzeichnet, daß die innere Öffnung der Halterung (8) nur minimal breiter als der Bügel (11) des Profils (10) ist.

7. Überfahrbrücke nach einem der Ansprüche 1 bis 6, dadurch gekennzeichnet, daß das Profil (7) ein Flacheisen ist.

8. Überfahrbrücke nach einem der Ansprüche 1 bis 7, dadurch gekennzeichnet, daß Halterung (8) ein einmal gekantetes Stahlblech ist.

9. Überfahrbrücke nach einem der Ansprüche 1 bis 8, dadurch gekennzeichnet, daß der Bügel (11) ein schräg geschnittenes einmal gekantetes Stahlblech ist.

10. Überfahrbrücke nach einem der Ansprüche 1 bis 9, dadurch gekennzeichnet, daß die Achse (9) eine Schraubverbindung ist.

## Claims

1. Loading bridge for ramps with a bridge platform (1) which can be pivoted about a first horizontal shaft (3) at its end which is on the ramp side and comprises an extension (2), which can be swung in and out or drawn in and out, for positioning on the loading area to be loaded or unloaded, which platform is provided with laterally attached, triangular foot protection sections (10) which can be pivoted about a second horizontal shaft (9) at their end which is on the ramp side, characterised in that
L-shaped sections (6) are rigidly connected to the lateral L-shaped outer sections (14) of the platform (1) by means (13) which are preferably releasable, the longer leg of which sections (6) is arranged in an extension of the lateral bridge face vertically downwards and the shorter leg of which points towards the bridge interior, and these sections (6) comprise at the front upper end on their inside a section (7), which is attached between the inner end of the short leg and the longer leg and forms an inclined plane extending obliquely downwards and outwards, and at the lower front end an L-shaped holder (8), which is arranged horizontally and points with its free end towards the end of the bridge which is on the ramp side, and
that a vertically arranged, L-shaped strap (11) is attached at the front end to the foot protection section (10), which can be pivoted about the second horizontal shaft at the end of the section (6) which is on the ramp side, the shorter leg of which strap points away from the end of the bridge which is on the ramp side and the longer leg of which extends at a right angle to the foot protection section (10) and comprises a bevel (12) extending towards the foot protection section (10) at the lower end.

2. Loading bridge according to claim 1, characterised in that triangular extension parts (16) extend the sections (6) towards the end of the bridge which is on the ramp side.

3. Loading bridge according to claim 1 or 2, characterised in that the sections (6), the foot protection sections (10) and the extension parts (16) are steel plates.

4. Loading bridge according to one of claims 1 to 3, characterised in that sealing elements (15) in the form of brushes or rubber lips are attached between the platform section (14) and the foot protection section (6).

5. Loading bridge according to one of claims 1 to 4, characterised in that the releasable means (13) are screw connections.

6. Loading bridge according to one of claims 1 to 5, characterised in that the inner opening in the holder (8) is only negligibly wider than the strap (11) of the section (10).

7. Loading bridge according to one of claims 1 to 6, characterised in that the section (7) is a flat bar.

8. Loading bridge according to one of claims 1 to 7, characterised in that the holder (8) is a steel plate which is turned once.

9. Loading bridge according to one of claims 1 to 8, characterised in that the strap (11) is a steel plate which is cut at an angle and turned once.

10. Loading bridge according to one of claims 1 to 9, characterised in that the shaft (9) is a screw connection.

## Revendications

1. Passerelle de dock avec une plate-forme (1) pouvant pivoter à son extrémité située côté dock autour d'un premier axe horizontal (3), qui comporte un prolongement (2) pouvant être rentré et sorti par rabattement respectivement rentré et sorti par translation en vue d'une installation sur la surface de chargement à charger ou à décharger et qui est équipée de profilés de protection de pieds (10) de forme triangulaire, disposés latéralement et pouvant pivoter autour d'un second axe horizontal (9) à leur extrémité située côté dock, caractérisée en ce que
des profilés (6) en forme de L, dont l'aile longue est disposée verticalement en bas dans le prolongement de la surface latérale de passerelle et dont l'aile courte est dirigée vers l'intérieur de la passerelle, sont reliés solidement par des moyens (13), de préférence démontables, avec les profilés extérieurs latéraux (14) en forme de L de la plate-forme (1) et ces profilés (6) comportent, sur leur côté intérieur et à l'extrémité supérieure avant, un profilé (7), disposé entre l'extrémité intérieure de l'aile courte et l'aile longue et formant un plan incliné orienté en oblique vers le bas et vers l'extérieur, ainsi qu'un support (8) situé à l'extrémité inférieure avant, agencé en forme de L, disposé orientalement et dirigé par son extrémité libre vers l'extrémité, située côté dock, de la passerelle et
en ce qu'il est prévu, à l'extrémité avant du profilé de protection de pieds (10), pouvant pivoter autour du second axe horizontal à l'extrémité, située côté dock, du profilé (6), un étrier (11) en forme de L, disposé verticalement, dont l'aile longue est orientée perpendiculairement au profilé de protection de pieds (10) et dont l'aile courte est orientée dans la direction opposée à celle vers l'extrémité, située côté dock, de la passerelle, l'aile longue de l'étrier comportant une partie biseautée (12) située à l'extrémité inférieure et dirigée vers le profilé de protection de pieds (10).

2. Passerelle selon la revendication 1, caractérisée en ce que des parties de prolongement (16) de forme triangulaire prolongent les profilés (6) vers l'extrémité, située côté dock, de la passerelle.

3. Passerelle selon la revendication 1 ou 2, caractérisée en ce que les profilés (6), les profilés de protection de pieds (10) et les parties de prolongement (6) sont formées de tôles d'acier.

4. Passerelle selon l'une des revendications 1 à 3, caractérisée en ce qu'entre le profilé de plate-forme (14) et le profilé de protection de pieds (6) sont disposés des éléments d'étanchéité (15) sous forme de brosses ou de lèvres en caoutchouc.

5. Passerelle selon l'une des revendications 1 à 4, caractérisée en ce que les moyens démontables (13) sont des liaisons vissées.

6. Passerelle selon l'une des revendications 1 à 5, caractérisée en ce que l'ouverture intérieure du support (8) a une largeur légèrement supérieure à celle de l'étrier (11) du profilé 10.

7. Passerelle selon l'une des revendications 1 à 6, caractérisée en ce que le profilé (7) est un fer plat.

8. Passerelle selon l'une des revendications 1 à 7, caractérisée en ce que le support (8) est une tôle d'acier pliée une fois.

9. Passerelle selon l'une des revendications 1 à 8, caractérisée en ce que l'étrier (11) est une tôle d'acier pliée une fois et coupée en oblique.

10. Passerelle selon l'une des revendications 1 à 9, caractérisée en ce que l'axe (9) ait une liaison vissée.
